# EUROPEAN PATENT SPECIFICATION

(11) **EP 0 413 609 B1**
(45) Date of publication and mention of the grant of the patent: **04.08.1993**
(21) Application number: 90309081.9
(22) Date of filing: 17.08.1990
(51) Int. Cl.: B60K 15/077

(54) **Fuel tank baffle assembly**
Beruhigungstopf für einen Brennstoffbehälter
Cloison de retenue pour réservoir de carburant

(30) Priority: 17.08.1989 JP 211863/89
(43) Date of publication of application: 20.02.1991
(73) Proprietor: NISSAN MOTOR CO., LTD., Yokohama City (JP); YAMAKAWA INDUSTRIAL CO., Ltd., Fuji City Shizuoka Prefecture (JP)
(72) Inventor: Kotera, Masaya, Sobudai, Zama City (JP); Kigawa, Tamiya, Matsuoka, Fuji City (JP)
(74) Representative: Milhench, Howard Leslie

(56) References cited:
- BE-A- 672 835
- DE-A- 3 905 611
- FR-A- 2 122 792
- US-A- 3 294 278
- US-A- 3 650 431
- US-A- 4 764 408

## Description

The present invention relates in general to fuel tanks and more particularly to an improved baffle assembly for the fuel tank of an automotive vehicle or the like.

### Description of the Prior Art

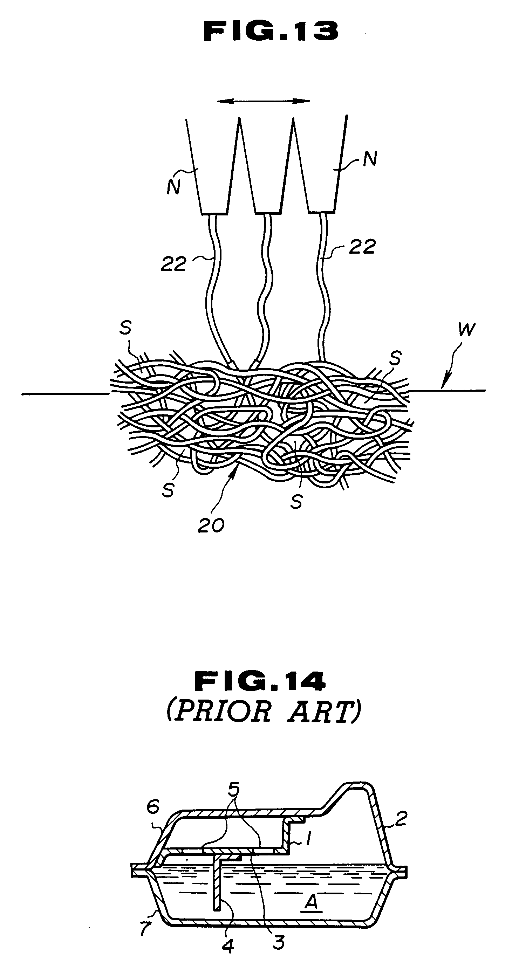

The fuel tank of an automotive vehicle is generally equipped with a baffle assembly for preventing large quantities of fuel from flowing or moving as a unitary mass, whereby to reduce as much as possible the noise caused by fuel movement and adverse effects upon the float of a fuel gauge. An example of such a baffle assembly is disclosed in Japanese Utility Model Provisional Publication No 62-108126 and is also shown in Fig. 14 of the accompanying drawings.

Referring to Fig. 14, a baffle assembly 1 is made of metal and is spot-welded to the inner surface of the main body 2 of a fuel tank. The baffle assembly 1 consists of a horizontal wall member 3 and a vertical wall member 4 attached thereto. The horizontal wall member 3 is formed with a number of openings 5 to allow restricted flow of fuel therethrough. A disadvantage of this prior art baffle assembly is that it is heavy since it is entirely made of metal, and, for the reason of avoiding excessive weight, it cannot have a sufficient number of and sufficiently large or spacious baffle wall members and therefore cannot reduce the noise caused by fuel movement to a desired extent.

Yet another form of baffle is known from US-A-3650431 which discloses a fuel tank filled with an essentially self-supporting anti-sloshing means formed of a bulked or textured filamentary plastics material and without provision of any internal supporting framework in the tank. On a different scale, FR-A-2122792 discloses a road tanker for the transportation of liquids in bulk and wherein all or part of the volume of the tanker contains an open-cell cellular material for restricting movement of the tanker contents.

### SUMMARY OF THE INVENTION

According to the present invention there is provided a fuel tank comprising: a fuel tank main body; and a baffle assembly comprising a mass of tangled synthetic resin strings installed in said fuel tank main body for restricting movement of fuel therein; as known from US-A-3650431 above-mentioned; and wherein the fuel tank of the invention is characterised in that said baffle assembly includes a baffle frame secured to said fuel tank main body and having an opening, and a baffle member formed from a mass of tangled synthetic resin strings as aforesaid installed in said opening, said baffle member having a solid peripheral portion at which it is secured to said baffle frame.

The baffle structure of the invention is effective for overcoming the above-mentioned disadvantages of the prior art, and it is additionally an advantage of the present invention that it provides a baffle assembly for a fuel tank which is light in weight and can efficiently reduce the noise otherwise caused by fuel movement in the fuel tank. The baffle assembly of the present invention can furthermore reduce manufacturing and assembly expenses and is well suited for mass production.

The above and further features of the present invention are set forth with particularity in the appended claims and will become clear to those possessed of the relevant skills from consideration of the following detailed description of exemplary embodiments given with reference to the accompanying drawings.

### BRIEF DESCRIPTION OF THE DRAWINGS

Fig. 1 is a perspective view of a fuel tank baffle assembly according to a first embodiment of the present invention;
Fig. 2 is a top plan view of an intermediate stage in the production of a baffle frame employed in the baffle assembly of Fig. 1;
Fig. 3 is a perspective view of the finished or completed baffle frame for the baffle assembly of Fig.1;
Fig. 4 shows the baffle frame of Fig. 3 after fitting of the baffle proper;
Fig. 5 and 6 are sectional views illustrating a process utilized for attaching to the baffle frame a baffle member formed from a mass of tangled synthetic resin strings;
Fig. 7 is an exploded view of a fuel tank equipped with the baffle assembly of Fig. 1;
Fig. 8 is a fragmentary exploded view of a baffle assembly according to another embodiment of the present invention;
Fig. 9 is a fragmentary sectional view of a fuel tank equipped with the baffle assembly of Fig. 8;
Fig. 10 is a fragmentary sectional view of a fuel tank equipped with a baffle assembly according to a further embodiment of the present invention;
Fig. 11 is a perspective view of a frame for use in a baffle assembly according to a further embodiment of the present invention;
Fig. 12 is a perspective view of a baffle frame for use in a baffle assembly according to a further embodiment of the present invention;
Fig. 13 is an enlarged view illustrating the manufacture of a baffle structure formed of tangled synthetic resin strings and
Fig. 14 is a sectional view of a fuel tank equipped with a prior art baffle assembly.

### DESCRIPTION OF THE EMBODIMENTS

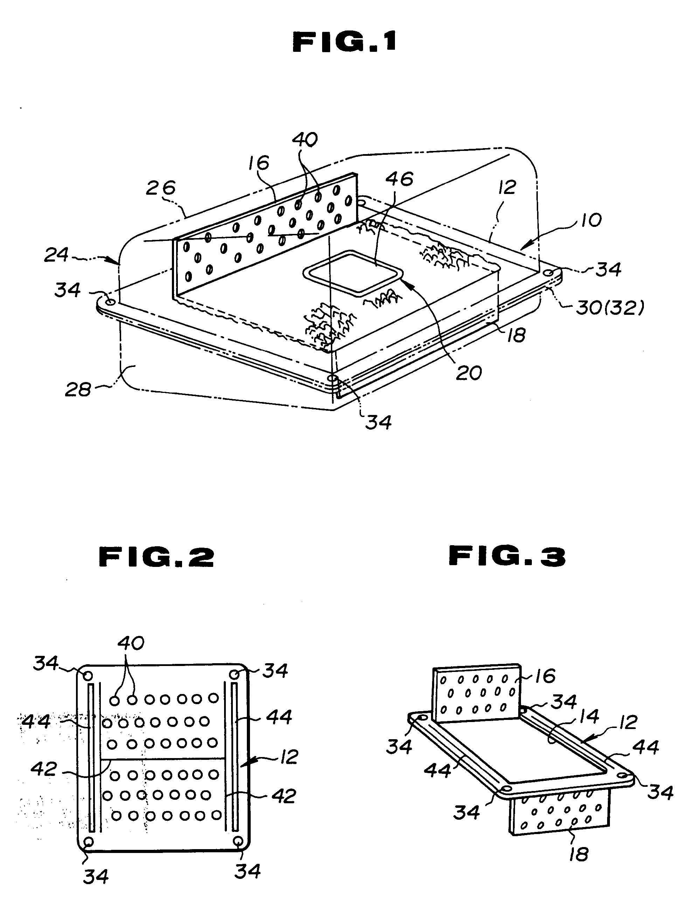

Referring first to Figs. 1 to 7, a baffle assembly 10 according to a first embodiment of the present invention includes a generally rectangular baffle frame 12 made of metal and having a rectangular central opening 14. The baffle frame 12 has, at its inner edges defining a pair of opposite sides of the central opening 14, a pair of integral upright walls 16 and 18 extending in opposite directions, i.e. upwardly and downwardly. The baffle frame 12 has installed thereon a baffle member 20 in the form of a generally rectangular mass of tangled plastics strings or filaments 22 as shown more clearly in Fig. 13. A fuel tank main body 24 is constituted by upper and lower shells 26 and 28 which are joined at flanges 30 and 32 thereof with the baffle frame 12 interposed therebetween. The baffle frame 12 has at each corner a location hole 34 corresponding in position to respective location holes 36 and 38 formed in the flanges 30 and 32 of the upper and lower shells 26 and 28. The upright walls 16 and 18 are formed with a plurality of openings 40 for allowing restricted flow of fuel therethrough.

The baffle member 20, as shown in Fig. 13, is formed from strings, filaments or threadlike members 22, which are made of a thermoplastic resin such as polypropylene, polyethylene, or a like polyolefin resin and which are tangled and joined collectively to form a foraminated or sponge-like porous structure. By virtue of this construction the baffle member is formed with a myriad structure of pores or small spaces "S" which intercommunicate to define openings or passages extending in all directions and arranged intricately in a mazelike or labyrinthine manner. The baffle member can by virtue of its construction gradually absorb the energy of a mass of moving fuel as the fuel passes through the spaces "S".

As shown in Fig. 13, the baffle member 20 may be formed by using a plurality of nozzles N which are horizontally moved in various directions while discharging a predetermined amount of synthetic resin in a molten state and allowing it to go down into water W.

The upright walls 16 and 18 of the baffle frame 12 are disposed adjacent to the front and rear walls of the rectangular fuel tank main body 24 in the front to rear direction of the vehicle such that the energy of a mass of fuel moving between the front and rear walls of the fuel tank main body 26 will be substantially absorbed by the upright walls 16 and 18. The front upright wall 16 is formed so as to be as tall as possible so as to be effective even against a high fuel wave.

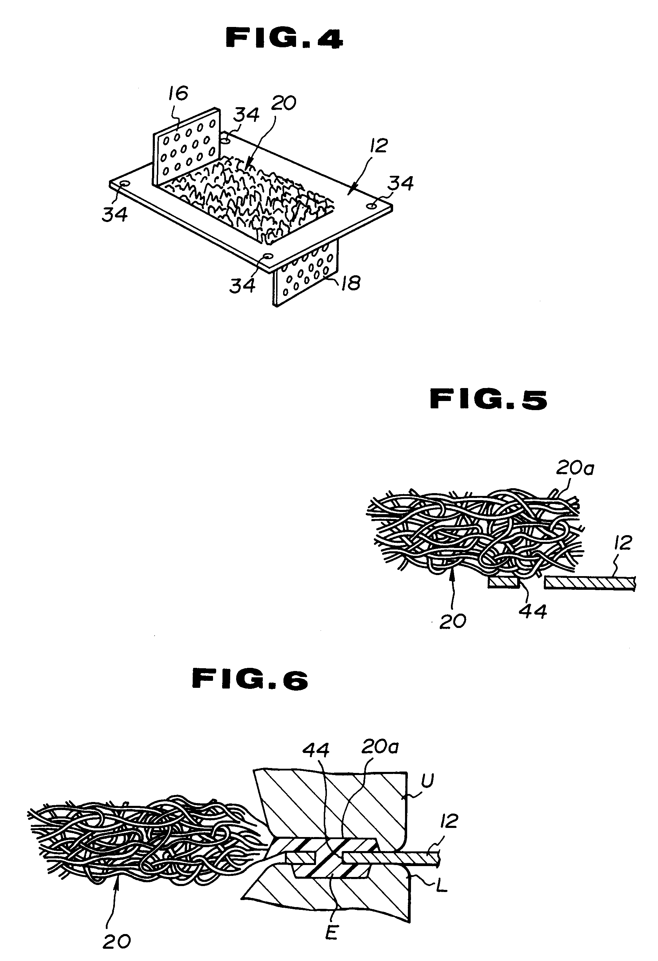

In production of the baffle assembly 10, a metal blank as shown in Fig. 2 is first prepared. The blank is formed with an H-like cut 42, a pair of parallel slits 44 and a plurality of openings 40. Then, as shown in Fig. 3, the walls 16 and 18 are separated at the cut 42 and bent in opposite directions to form the baffle frame 12. The baffle member 20, formed from a mass of thermoplastics strings which are tangled and joined collectively, is installed on the baffle frame 12 as shown in Fig. 4. In this embodiment, as shown in Fig. 5 the baffle member 20 is installed in such a manner that its end portions 20a overlap the slits 44 in the baffle frame 12. The baffle member 20 together with the baffle frame 12 is then pressed between hot dies U and L such that the baffle member 20 is partly melted at its end portions 20a and fills the cavity E between the dies U and L. The baffle member thus becomes fixed at its end portions 20a to the baffle frame 12 when it cools and solidifies, as shown in Fig. 6. The baffle member 20 may then be formed with a pump gauge receiving hole 46 and the like (refer to Fig. 1) in predetermined places.

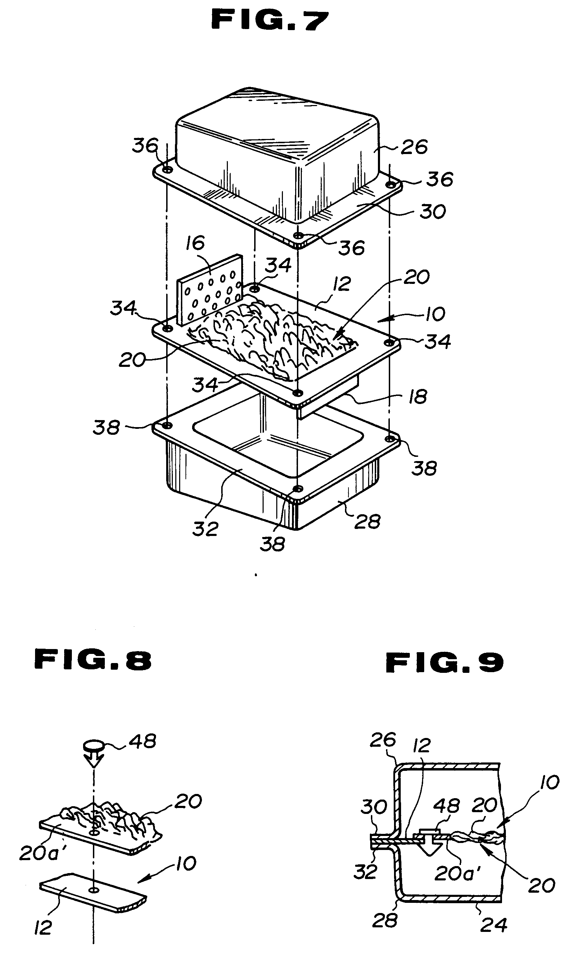

In installation of the baffle assembly 10 in the fuel tank main body 24, the baffle assembly 10 is placed between the flanges 30 and 32 of the upper and lower shells 26 and 28 as seen from Fig. 7. The location holes 36 and 38 of the flanges 30 and 32 of the upper and lower shells 26 and 28 are aligned with the respective location holes 34 of the baffle assembly 10, and under this condition the flanges 30 and 32 are seam-welded together. In this instance, it is to be noted that the baffle assembly 10 is secured to the flanges 30 and 32 upon seam-welding of the same.

From the foregoing, it will be understood that the baffle assembly 10 is secured to the fuel tank main body 24 without requiring any particular work such as spot-welding, etc., but by common seam-welding. The assembly or installation of the baffle assembly is thus simplified, therefore reducing assembly expenses. It will be further understood that the baffle assembly 10 can be located relative to the fuel tank main body 2 by aligning the location holes 34 with the corresponding location holes 36 and 38, thus making it possible to further simplify the assembly work. Furthermore, while the baffle assembly 10 includes a baffle frame 12 made of metal, the baffle member 20 is formed from a plastics material sponge-like body, thus making it possible to reduce considerably the weight of the overall baffle. It will be further understood that the baffle member 20 can absorb the energy of moving fuel gradually and thereby efficiently reduce the noise caused by fuel movement in the fuel tank.

Figs. 8 and 9 show another embodiment which is substantially similar to the previous embodiment except that the baffle frame 12 and the baffle member are joined in a different manner. In this embodiment, the baffle member 20 is formed with a solid, integral, peripheral flange 20a' by being pressed between hot dies prior to installation to the baffle frame 12. In installation, the baffle member is secured at the peripheral flange 20a' to the baffle frame 12 by means of clips 48, etc. for thereby constituting the baffle assembly 10. The clips 48 may be formed integrally with the baffle member 20 at the time of forming the peripheral flange 20a'. This embodiment can simplify the assembly of the baffle frame 12 and the baffle member 20 is therefore well suited to mass production.

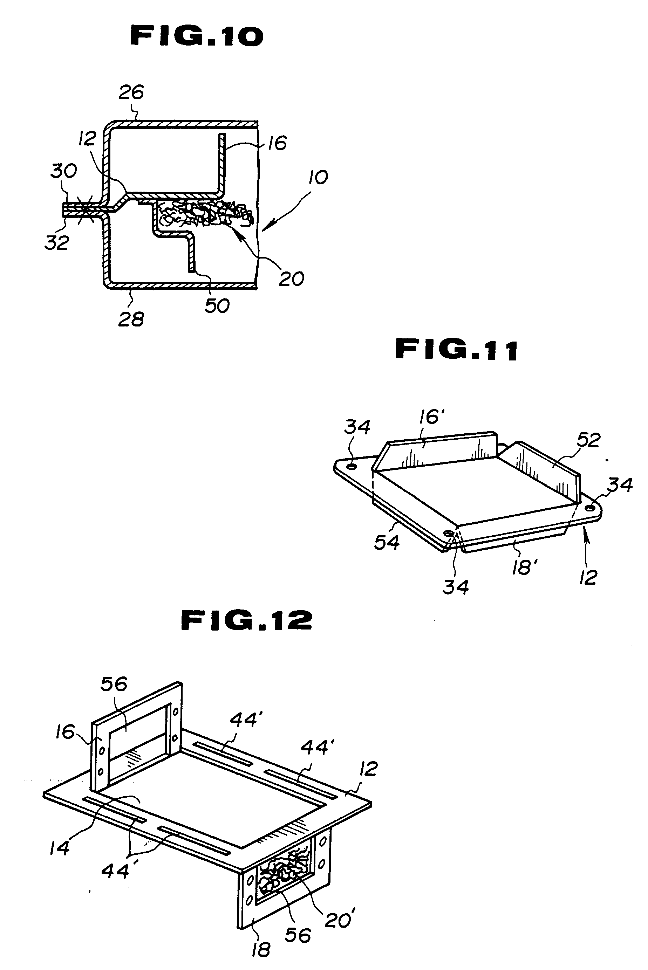

Fig. 10 shows a further embodiment which is substantially similar to the previous embodiment of Figs. 1 to 7 except that an additional vertical flange is attached to the baffle frame 12 by spot-welding for further restricting movement of fuel in a predetermined direction.

Fig. 11 shows a further embodiment which is substantially similar to the previous embodiments except that the baffle frame 12 is formed with two pairs of integral vertical walls 16', 18', 52 and 54 extending from the respective inner edges of the frame 12 in opposite directions. The upright walls 16', 18', 52 and 54 are effective for restricting movement of fuel not only in the front to rear direction of the vehicle but also in the direction of the vehicle width.

Fig. 12 shows a further embodiment which is substantially similar to the previous embodiments except that the upright walls 16 and 18 of the baffle frame 12 are formed with openings 56 in which baffle members 20 similar to the baffle member 10 are are installed and that each slit 44' consists of two separate sections. This embodiment is effective for further reducing the overall weight of the baffle and reducing the noise caused by fuel movement. The separation of the slits 44' is effective for increasing the rigidity of the baffle structure.

## Claims

1. A fuel tank comprising:
a fuel tank main body (24); and
a baffle assembly (10) comprising a mass of tangled synthetic resin strings (22) installed in said fuel tank main body (24) for restricting movement of fuel therein;
characterised in that said baffle assembly (10) includes a baffle frame (12) secured to said fuel tank main body (24) and having an opening (14), and a baffle member (20) formed from a mass of tangled synthetic resin strings (22) as aforesaid installed in said opening (14), said baffle member (20) having a solid peripheral portion (20a) at which it is secured to said baffle frame (12).

2. A fuel tank as claimed in claim 1 wherein said baffle frame (12) is made of metal, and said synthetic resin is a thermoplastic material.

3. A fuel tank as claimed in claim 2 wherein said solid peripheral portion (20a) of said baffle member (20) is formed by being heated between hot dies.

4. A fuel tank as claimed in claim 3 wherein said baffle frame (12) has a plurality of apertures (44) around said opening (14), and said solid peripheral portion (20a) of said baffle member (20) extends into said apertures (44) for securing the baffle member (20) to the baffle frame (12).

5. A fuel tank as claimed in claim 3 wherein said solid peripheral portion (20a) of said baffle member (20) is secured to said baffle frame (12) by means of clips (48).

6. A fuel tank as claimed in claim 5 wherein said clips (48) are integral with said solid peripheral portion (20a) of said baffle member (20) and are formed when said solid peripheral portion is formed in said dies.

7. A fuel tank as claimed in any of the preceding claims wherein said fuel tank main body (24) is constituted by upper and lower shells (26, 28) having joining flanges (30, 32), said baffle frame (12) being interposed between said flanges (30, 32).

8. A fuel tank as claimed in any of the preceding claims wherein said opening (14) of said baffle frame (12) has a pair of opposite inner edges, and integral flanges (16, 18) extending from said inner edges in opposite directions.

9. A fuel tank as claimed in claim 8 wherein said opening (14) of said baffle frame (12) further has another pair of inner edges opposed in a direction transverse to the direction in which the first-mentioned pair of inner edges are opposed, and integral flanges (52, 54) extend from said second-mentioned pair of inner edges in opposite directions.

10. A fuel tank as claimed in claim 8 or 9 wherein said flanges (16, 18) are each formed with a plurality of openings (40).

11. A fuel tank as claimed in claim 8 or 9 wherein each of said flanges (16, 18) is formed with an opening (56) in which a baffle member (20) formed from a mass of tangled synthetic resin strings is installed.

12. A fuel tank as claimed in claim 7 or in any of claims 8 to 11 as dependent on claim 7 wherein said joining flanges (30, 32) of said upper and lower shells (26, 28) have location holes (36, 38), and said baffle frame (12) has location holes (34) aligned with corresponding location holes (36, 38) of said adjoining flanges (30, 32).

13. A fuel tank as claimed in claim 12 wherein said joining flanges (30, 32) of said upper and lower shells (26, 28) and said baffle member (20) are joined together by a common welding process.

14. A fuel tank as claimed in any of the preceding claims wherein said baffle frame (12) further has one or more flanges (50) secured thereto by welding.

15. An automotive vehicle provided with a fuel tank as claimed in any of the preceding claims.

## Patentansprüche

1. Kraftstofftank, der umfaßt:
einen Kraftstofftankhauptkörper (24); und
eine Dämpferbaugruppe (10), die eine Masse von verschlungenen Syntheseharzfäden (22) umfaßt, die im Kraftstofftankhauptkörper (24) angebracht ist und die Bewegung von Kraftstoff darin einschränkt;
dadurch **gekennzeichnet,** daß
die Dämpferbaugruppe (10) einen Dämpferrahmen (12) enthält, der am Kraftstofftankhauptkörper (24) befestigt ist und eine Öffnung (14) hat, sowie ein Dämpferelement, das aus einer Masse von verschlungenen Syntheseharzfäden (22) besteht, das wie erwähnt in der Öffnung (14) angebracht ist, wobei das Dämpferelement (20) einen massiven Umfangsabschnitt (20a) hat, an dem es am Dämpferrahmen (12) befestigt ist.

2. Kraftstofftank nach Anspruch 1, wobei der Dämpferrahmen (12) aus Metall besteht, und das Syntheseharz ein thermoplastisches Material ist.

3. Kraftstofftank nach Anspruch 2, wobei der massive Umfangsabschnitt (20a) des Dämpferelementes (20) durch Erwärmen zwischen Warmgesenken geformt wird.

4. Treibstofftank nach Anspruch 3, wobei der Dämpferrahmen (12) eine Vielzahl von Öffnungen (44) um die Öffnung (14) herum aufweist, und sich der massive Umfangsabschnitt (20a) des Dämpferelementes (20) zur Befestigung des Dämpferelementes (20) am Dämpferrahmen (12) in die Öffnungen (44) hinein erstreckt.

5. Kraftstofftank nach Anspruch 3, wobei der massive Umfangsabschnitt (20a) des Dämpferelementes (20) mittels Klemmen (48) am Dämpferrahmen (12) befestigt ist.

6. Kraftstofftank nach Anspruch 5, wobei die Klemmen (48) aus einem Stück mit dem massiven Umfangsabschnitt (20a) des Dämpferelementes (20) bestehen und ausgeformt werden, wenn der massive Umfangsabschnitt in den Warmgesenken geformt wird.

7. Kraftstofftank nach einem der vorangehenden Ansprüche, wobei der Kraftstofftankhauptkörper (24) durch eine obere und eine untere Schale (26, 28) gebildet wird, die Verbindungsflansche (30, 32) aufweisen, wobei der Dämpferrahmen (12) zwischen die Flansche (30, 32) eingesetzt wird.

8. Kraftstofftank nach einem der vorangehenden Ansprüche, wobei die Öffnung (14) des Trägerrahmens (12) ein Paar von einander gegenüberliegenden Innenkanten hat, sowie integrale Flansche (16, 18), die sich von den Innenkanten in entgegengesetzten Richtungen erstrecken.

9. Kraftstofftank nach Anspruch 8, wobei die Öffnung (14) des Dämpferrahmens (12) des weiteren ein weiteres Paar von Innenkanten aufweist, die einander in einer Richtung gegenüberliegen, die quer zu der Richtung liegt, in der das erstgenannte Paar von Innenkanten einander gegenüberliegt, und wobei sich integrale Flansche (52, 54) vom an zweiter Stelle erwähnten Paar von Innenkanten in entgegengesetzten Richtungen erstrecken.

10. Treibstofftank nach Anspruch 8 oder 9, wobei die Flansche (16, 18) jeweils mit einer Vielzahl von Öffnungen (40) versehen sind.

11. Kraftstofftank nach Anspruch 8 oder 9, wobei jeder der Flansche (16, 18) mit einer Öffnung (56) versehen ist, in der ein Dämpferelement (20), das aus einer Masse von verschlungenen Syntheseharzfäden geformt wird, angebracht ist.

12. Kraftstofftank nach Anspruch 7 oder nach einem der Ansprüche 8 bis 11 in Abhängigkeit von Anspruch 7, wobei die Verbindungsflansche (30, 32) der oberen und der unteren Schale (26, 28) Befestigungslöcher (36, 38) haben, und wobei der Dämpferrahmen (12) Befestigungslöcher (34) hat, die mit entsprechenden Befestigungslöchern (36, 38) der angrenzenden Flansche (30, 32) fluchtend sind.

13. Kraftstofftank nach Anspruch 12, wobei die Verbindungsflansche (30, 32) der oberen und der unteren Schale (26, 28) und das Dämpferelement (20) durch ein gemeinsames Schweißverfahren miteinander verbunden werden.

14. Kraftstofftank nach einem der vorangehenden Ansprüche, wobei der Dämpferrahmen (12) des weiteren einen oder mehrere Flansche (50) aufweist, die durch Schweißen an selbigem befestigt werden.

15. Kraftfahrzeug, das mit einem Kraftstofftank nach einem der vorangehenden Ansprüche versehen ist.

## Revendications

1. Un réservoir de carburant comprenant :
un corps principal (24) de réservoir de carburant; et
un ensemble déflecteur (10) comprenant une masse de cordes enchevêtrées (22) en résine synthétique installées dans ledit corps principal (24) de réservoir de carburant afin d'y restreindre le déplacement de carburant;
caractérisé en ce que ledit ensemble déflecteur (10) inclut un châssis (12) de déflecteur, fixé audit corps principal (24) de réservoir de carburant et présentant une ouverture (14), et un élément déflecteur (20), formé d'une masse de cordes enchevêtrées (22) de résine synthétique comme mentionné ci-dessus installé dans ladite ouverture (14), ledit élément déflecteur (20) étant pourvu d'une partie périphérique solide (20a) par laquelle il est fixé audit châssis (12) en déflecteur.

2. Réservoir de carburant selon la revendication 1 dans lequel ledit châssis (12) de déflecteur est en métal, et ladite résine synthétique est une matière thermoplastique.

3. Réservoir de carburant selon la revendication 2 dans lequel ladite partie solide périphérique (20a) dudit élément déflecteur (20) est formée en étant chauffée entre des matrices chaudes.

4. Réservoir de carburant selon la revendication 3 dans lequel ledit châssis (12) de déflecteur présente une série d'ouvertures (41) autour de ladite ouverture (14), et ladite partie périphérique solide (20a) dudit élément déflecteur (20) s'étend dans lesdites ouvertures (44) afin de fixer l'élément déflecteur (20) sur le châssis (12) de déflecteur.

5. Réservoir de carburant selon la revendication 3 dans lequel ladite partie solide périphérique (20a) dudit élément déflecteur (20) est fixée sur ledit châssis (12) de déflecteur au moyen de pinces (48).

6. Réservoir de carburant selon la revendication 5 dans lequel lesdites pinces (48) sont d'un seul tenant avec ladite partie solide périphérique (20a) dudit élément déflecteur (20) et sont formées lorsque ladite partie solide périphérique est formée dans lesdites matrices.

7. Réservoir de carburant selon l'une quelconque des revendications précédentes dans lequel ledit corps principal (24) de réservoir de carburant est constitué de coquilles supérieure et inférieure (26, 28) pourvues de brides d'assemblage (30, 32), ledit châssis (12) de déflecteur étant interposé entre lesdites brides (30, 32).

8. Réservoir de carburant selon l'une quelconque des revendications précédentes dans lequel ladite ouverture (14) dudit châssis (12) de déflecteur présente une paire de bords intérieurs opposés, et deux brides d'un seul tenant (16, 18) s'étendant dans des directions opposées à partir desdits bords intérieurs.

9. Réservoir de carburant selon la revendication 8 dans lequel ladite ouverture (14) dudit châssis (12) de déflecteur présente en outre une autre paire de bords intérieurs opposés dans une direction transversale à la direction dans laquelle les bords intérieurs de la première paire sont opposés, et des brides d'un seul tenant (52, 54) s'étendent dans des directions opposées à partir desdits bords intérieurs de la deuxième paire.

10. Réservoir de carburant selon la revendication 8 ou 9 dans lequel une série d'ouvertures (40) est ménagée dans chacune desdites brides (16, 18).

11. Réservoir de carburant selon la revendication 8 ou 9 dans lequel une ouverture (56), dans laquelle est installé un élément déflecteur (20) formé d'une masse de cordes enchevêtrés en résine synthétique, est ménagée dans chacune desdites brides (16, 18).

12. Réservoir de carburant selon la revendication 7 ou selon l'une quelconque des revendications 8 à 11 lorsqu'elle dépend de la revendication 7, dans lequel des trous de positionnement (36, 38) sont ménagés dans lesdites brides d'assemblage (30, 32) desdites coquilles supérieure et inférieure (26, 28) et des trous de positionnement (34) alignés avec les trous correspondants de positionnement (36, 38) desdites brides d'assemblage (30, 32) sont ménagés dans ledit châssis (12) de déflecteur.

13. Réservoir de carburant selon la revendication 12 dans lequel lesdites brides d'assemblage (30, 32) desdites coquilles supérieure et inférieure (26, 28) et ledit élément déflecteur (20) sont assemblés entre eux par un processus commun de soudage.

14. Réservoir de carburant selon l'une quelconque des revendications précédentes dans lequel ledit châssis (12) de déflecteur comprend en outre une ou plusieurs brides (50) qui lui sont fixées par soudage.

15. Véhicule automobile pourvu d'un réservoir de carburant selon l'une quelconque des revendications précédentes.
